# FASCICULE DE BREVET EUROPEEN

(11) **EP 1 976 758 B1**
(45) Date de publication et mention de la délivrance du brevet: **28.07.2010**
(21) Numéro de dépôt: 07718053.7
(22) Date de dépôt: 18.01.2007
(51) Int. Cl.: B64D 29/08, B64D 29/00

(54) **SYSTEME DE FIXATION POUR ELEMENT CONSTITUTIF D'UNE NACELLE DE TURBOREACTEUR**
BEFESTIGUNGSSYSTEM FÜR EIN BAUTEIL EINER TRIEBWERKSGONDEL
FIXING SYSTEM FOR A COMPONENT OF A TURBINE NACELLE

(30) Priorité: 23.01.2006 FR 0600563
(43) Date de publication de la demande: 08.10.2008
(73) Titulaire: Aircelle, 76700 Gonfreville L'Orcher (FR)
(72) Inventeur: VAUCHEL, Guy, Bernard, F-76610 Le Havre (FR); GONIDEC, Patrick, F-31530 Bretx (FR); ROUYER, Pascal, Gérard, F-76430 Saint Romain de Clobosc (FR)
(74) Mandataire: Jouanneau, Lionel
(86) Numéro de dépôt international: PCT/FR2007/000088
(87) Numéro de publication internationale: WO 2007/083024

(56) Documents cités:
- EP-A1- 0 361 901
- EP-A1- 1 488 999
- WO-A-2005/110845
- GB-A- 2 151 995
- US-A1- 2006 038 065
- US-B1- 6 340 135

## Description

La présente invention se rapporte à un système de fixation pour un élément constitutif d'une nacelle de turboréacteur sur un mât de liaison auquel la nacelle est rattachée, ainsi qu'à une nacelle équipée d'un tel système de fixation.

Un turboréacteur double flux comporte un moteur logeant dans une nacelle tubulaire dont la paroi interne définit avec un capot primaire entourant le moteur un passage annulaire. Cette nacelle présente une entrée d'air en amont du moteur, des moyens d'inversion de poussée dans sa section médiane et une tuyère d'éjection dont la sortie est située en aval du moteur.

Le moteur génère deux flux d'air par l'intermédiaire des pâles d'une soufflante en rotation, à savoir un flux d'air chaud, appelé flux primaire, issu de la chambre de combustion du moteur, et un flux d'air froid, appelé flux secondaire, qui circule à l'extérieur du moteur à travers le passage annulaire, également appelé veine.

Les deux flux d'air sont éjectés du turboréacteur par l'arrière de la nacelle. Pour ce faire, le turboréacteur est équipé d'un conduit en arrière de la soufflante, appelé tuyère d'éjection, dont le but est de canaliser les flux d'air générés. Généralement ce conduit comprend une paroi interne qui entoure la structure du moteur proprement dite en arrière de la soufflante et une paroi externe dont la partie amont vient en continuité du carter du moteur qui entoure la soufflante. La paroi externe peut canaliser à la fois le flux secondaire et le flux primaire dans sa partie aval dans le cas d'une éjection commune des flux ou uniquement le flux secondaire dans le cas de nacelles dites à flux séparés.

Une paroi peut également caréner l'extérieur du capot primaire qui entoure le moteur de manière à minimiser la traînée de l'ensemble propulsif. Ceci est notamment dans le cas d'un ensemble propulsif rapporté sur l'extérieur de l'aéronef, particulièrement lorsqu'il est attaché sous une aile ou à l'arrière du fuselage.

En plus d'abriter le moteur et de canaliser les flux, une nacelle abrite de manière générale un ensemble de dispositifs d'actionnement annexes liés à son fonctionnement et assurant diverses fonctions lorsque le turboréacteur est en fonctionnement ou à l'arrêt.

On compte généralement trois principaux systèmes d'actionnement annexes intégrés dans une nacelle à savoir, l'ouverture radiale de capotages pour la maintenance du turboréacteur, le déploiement et l'escamotage de capots mobiles de l'inverseur de poussée, et l'ouverture radiale des deux demi parties de l'inverseur de poussée pour la réalisation d'opérations de maintenance plus poussées sur le moteur lui-même.

Pour ce faire, on connaît des structures de nacelles formées de deux demi-parties pouvant s'ouvrir et qui peuvent être associées à un capot primaire entourant le moteur. De telles nacelles sont communément appelées « C-duct », par opposition à une nacelle « O-duct » ne comportant pas de demi-parties amovibles.

Une structure « C-duct » a pour avantage d'offrir un accès aisé au moteur pour la réalisation d'opérations de maintenance au sol après déverrouillage de systèmes de maintien des demi-parties puis pivotement de ces dernières autour d'un axe longitudinal voisin du mât ou pylône par lequel la nacelle est reliée à l'aile ou au fuselage. Les demi-parties sont liées entre elles en partie inférieure par des verrous.

Actuellement les opérations de maintenance et opérations de révision du moteur sont relativement fréquentes, et l'accès au moteur doit donc être rapide et simple. Les nacelles « C-duct » actuelles répondent bien à cette demande.

Toutefois, bien que répondant à ce besoin d'un accès rapide et aisé au moteur, les systèmes d'ouverture actuels par pivotement des demi-parties de la nacelle doivent répondre à des critères spécifiques en termes de résistance et représentent un coût de développement et de fabrication non négligeable.

Plus précisément, lors du chargement en pression du turboréacteur, le capot primaire et la structure externe définissant la veine subissent des contraintes de déformation qui se concentrent sur les lignes d'attache extrêmes, à savoir l'axe longitudinal autour duquel une demi-partie pivote et l'axe longitudinal inférieur au niveau duquel se situent les verrous assurant la fermeture des deux demi-parties.

Par ailleurs, l'ouverture des demi-parties nécessite également la présence de vérins d'ouverture à l'intérieur de la nacelle ainsi que de bielles permettant de sécuriser les demi-parties en position ouverte. Ces éléments représentent un poids et un espace d'occupation importants.

Un autre inconvénient encore est que le capot primaire entourant le moteur et la structure externe doivent pouvoir être ouverts simultanément et doivent donc être liés en eux. Ceci est réalisé par l'intermédiaire d'un îlot de liaison monté pivotant et sur lequel sont fixés les structures constituant la nacelle. Ceci alourdit l'ensemble de la nacelle et complique son assemblage.

Des avancées technologiques récentes ont permis de mettre au point des moteurs ne nécessitant des opérations de révision ou de maintenance importante qu'après environ chaque tiers de la durée de vie du turboréacteur pour un court et moyen courrier. De ce fait, les opérations de maintenance se font moins fréquente et il existe un besoin pour un nouveau système de fixation des éléments d'une nacelle.

Enfin, les moteurs modernes ont tendance à intégrer une soufflante de plus en plus grande qui entraîne une forme générale du moteur en « taille de guêpe » en aval de la soufflante. La conséquence est une plus grande souplesse des structures plus sensibles aux déformations qui doivent donc être fixée de manière plus ferme. Avec une structure de nacelle actuelle, un jeu élevé doit être prévu entre les aubes internes du moteur et la structure de la nacelle entourant ces aubes afin d'éviter tout contact entre les deux éléments envol.

Divers systèmes de fixation existants permettent de résoudre au moins partiellement ces problèmes. On peu notamment citer des systèmes de fixation tels que décrits dans les documents GB 2 151 995, qui montre toutes les caractéristiques du préambule de la revendication 1, US 6 340 135, EP 0 361 901 ou encore EP 1488 999. Toutefois ces systèmes restent relativement rigides.

La présente invention a pour but de proposer un système amélioré pour pallier les inconvénients précédemment évoqués et notamment un système de fixation possédant une plus grande tolérance aux déformations tout en facilitant les opérations de maintenance.

La présente invention consiste pour ce faire en un système de fixation d'au moins un élément constitutif d'une nacelle de turboréacteur sur un mât de liaison auquel la nacelle est rattachée et comprenant au moins une zone de couplage présentée par l'élément constitutif apte à coopérer avec au moins une zone de couplage complémentaire présentée par le mât, et des moyens de fixation aptes à réaliser avec des moyens de fixation complémentaires une liaison rigide et démontable entre ledit élément constitutif et le mât, **caractérisé en ce que** les moyens de fixation et les moyens de fixations complémentaires sont aptes à pivoter légèrement l'un par rapport à l'autre.

Ainsi, en prévoyant un système de fixation rigide et démontable, il n'est plus nécessaire de recourir à une fixation mobile permettant une ouverture des éléments constitutifs, l'accès pour les opérations de maintenance s'effectuant par démontage du système de fixation et dépose des éléments constitutifs de la nacelle. Les moyens mécaniques, tels que système de levage, permettant de déplacer les éléments sont indépendants de la nacelle et ne doivent donc plus être inclus dans cette dernière. De plus, les différents éléments peuvent être montés et démontés indépendamment les uns des autres, ce qui permet de supprimer une partie des organes de liaison et notamment de réduire les dimensions et la masse des îlots de liaison. Le coût requis par les dispositifs de maintenance permettant la dépose des éléments constitutifs de la nacelle est largement compensé par la suppression des vérins d'ouverture et de verrouillage entre autres simplifications possibles. De plus, grâce à une fixation rigide, le risque de contact deux éléments est réduits et il est donc possible de réduire le jeu laissé entre les éléments.

Par ailleurs, en prévoyant des moyens de liaison aptes à pivoter légèrement l'un par rapport à l'autre le système de fixation présente une tolérance améliorée aux déformations ainsi qu'une facilité de pose et dépose accrue.

Selon une première variante de réalisation, les moyens de fixation comprennent au moins une ferrure.

Selon une deuxième variante de réalisation, les moyens de fixation comprennent au moins une glissière apte à coopérer avec un rail correspondant.

Selon une troisième variante de réalisation, les moyens de fixation comprennent au moins un boulon apte à coopérer avec un alésage correspondant.

Selon une quatrième variante de réalisation, les moyens de fixation sont des barres de liaison rattachées à l'élément constitutif et montées flottantes à travers le mât de liaison.

Bien évidemment, ces variantes peuvent éventuellement être combinées entre elles.

La présent invention se rapporte également à une nacelle de turboréacteur destinée à abriter un moteur d'avion et réalisée à partir d'une structure comprenant au moins deux demi-parties **caractérisée en ce que** chaque demi-partie comprend un système de fixation selon invention.

De manière préférentielle, la nacelle comprend une structure interne destinée à entourer le moteur et une structure externe délimitant une veine avec la structure interne, **caractérisée en ce que** les demi-parties d'au moins l'une des structures interne et/ou externe sont équipées d'un système de fixation selon l'invention. Avantageusement, les demi-parties des deux structures sont équipées d'un système de fixation selon l'invention.

Avantageusement encore, les demi-parties de la structure interne comprennent des moyens de verrouillage aptes à coopérer avec des moyens de verrouillage complémentaires assujettis au carter de la soufflante.

Préférentiellement, la nacelle comprend une portée disposée en aval du moteur et apte à servir d'interface de contact entre ledit moteur et la structure interne.

Préférentiellement encore, au moins une des demi-parties de la structure externe comprend au moins une trappe de visite.

La mise en oeuvre de l'invention sera mieux comprise à l'aide de la description détaillée qui est exposée ci-dessous en regard du dessin annexé dans lequel :
La figure 1 est une représentation schématique en coupe transversale montrant schématiquement la structure générale d'une nacelle.
Les figures 2 et 3 sont des vues en perspective d'une nacelle comprenant un système de fixation selon l'art antérieur comprenant un système de fixation amovible.
La figure 4 est une vue partielle en coupe transversale des demi-parties de la structure interne au niveau de leur fixation en partie inférieure.
La figure 5 est une vue partielle en coupe transversale des demi-parties de la structure interne au niveau de leur fixation en partie supérieure.
Les figures 6 à 11 montrent différents modes de fixation des demi-parties des structures internes en partie supérieure selon d'autres modes de réalisation et pouvant être adaptés selon l'invention si nécessaire.
Les figures 12 à 15 montrent différents modes de fixation des demi-parties des structures externe en partie supérieure selon d'autres modes de fixation adaptables selon l'invention.
La figure 16 est une vue partielle en coupe longitudinale d'un mode particulier de fixation de la structure interne.

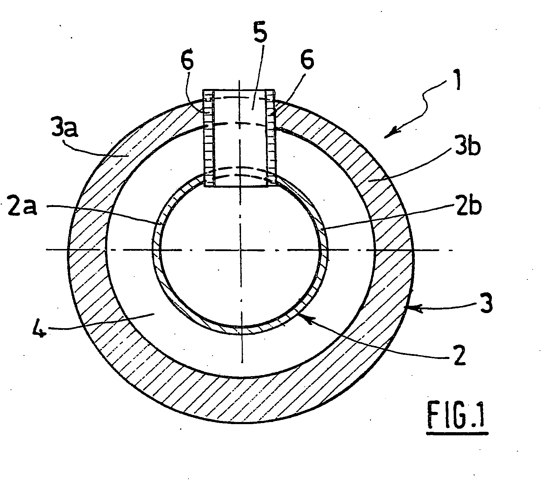

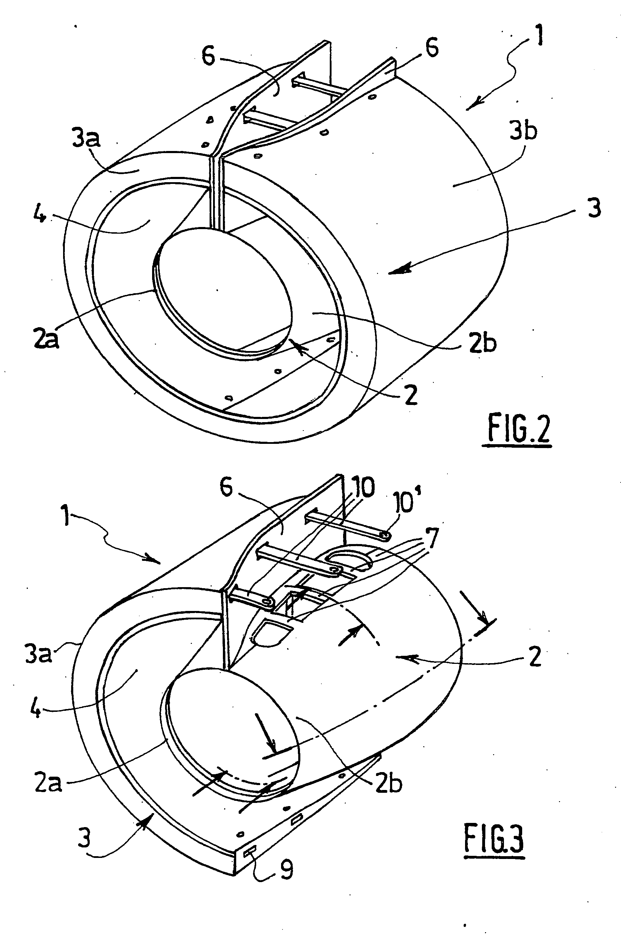

Une nacelle 1 selon l'invention telle que représentée sur les figures 1 et 2 est destinée à abriter un moteur (non représenté) de turboréacteur double flux.

Cette nacelle 1 présente une entrée d'air en amont du moteur, des moyens d'inversion de poussée (non visibles) dans sa section médiane et une tuyère d'éjection (non visible) dont la sortie est située en aval du moteur.

La nacelle 1 est réalisée à partir de demi-parties assemblées pour donner à la nacelle 1 sa forme tubulaire autour du moteur et comprend une structure interne 2, ou capot primaire, entourant la structure du moteur et une structure externe 3 formant avec la structure interne 2 un conduit intérieur 4 annulaire appelé veine et destiné à la circulation d'un flux secondaire généré par le moteur.

La structure interne 2 peut également comprendre une paroi carénant l'extérieur du moteur pour minimiser la traînée de l'ensemble propulsif.

Une telle nacelle 1 est destinée à être rattachée à un mât 5 permettant la liaison de l'ensemble propulsif avec l'avion. Le mât 5 s'étend généralement sous l'aile et traverse la nacelle 1 pour venir être ancré dans le moteur. Des structures latérales 6 servent de carénage au mât 5 et à des éléments reliant l'avion, et plus précisément l'aile sous laquelle est fixé le mât 5, au moteur. Ces structures latérales 6 de carénages traversent la structure externe 3 et la veine 4 jusqu'à la structure interne 2 au niveau de laquelle un joint peut être ajouté pour assurer l'étanchéité. Les structures latérales 6 peuvent également être utilisées comme capotages et/ou structures de renfort du mât 5 lui-même. Elles peuvent être rapportées sur le mât 5 ou intégrées à celui-ci. Dans son sens large, le terme mât englobe également ces structures latérales 6.

Les figures 1 et 2 présentent un mode particulier de fixation des demi-parties 2a, 2b de la structure interne 2 et des demi-parties 3a, 3b de la structure externe 3. D'autres modes de fixation sont représentés sur les figures suivantes. Selon l'invention, toutes ces fixations sont montées de manière à permettre un débattement entre les deux parties. Plus précisément, chaque système de fixation comprend des moyens de fixation aptes à coopérer avec des moyens de fixation complémentaires et sont aptes à pivoter légèrement l'un par rapport à l'autre. Cette propriété de pivotement peut être intrinsèque aux moyens de fixation, c'est-à-dire que les moyens de fixation comprennent naturellement des moyens leur permettant ce pivotement ou nécessiter des moyens complémentaires de pivotement.

Les deux demi-parties 2a, 2b de la structure interne 2 sont reliées entre elles selon un axe longitudinal inférieur et un axe longitudinal supérieur.

La jonction des deux demi-parties 2a, 2b au niveau de l'axe longitudinal inférieur s'effectue par emboîtement par complémentarité de forme, et verrouillage des deux demi-parties 2a, 2b par boulonnage. Cette liaison est connue et habituelle.

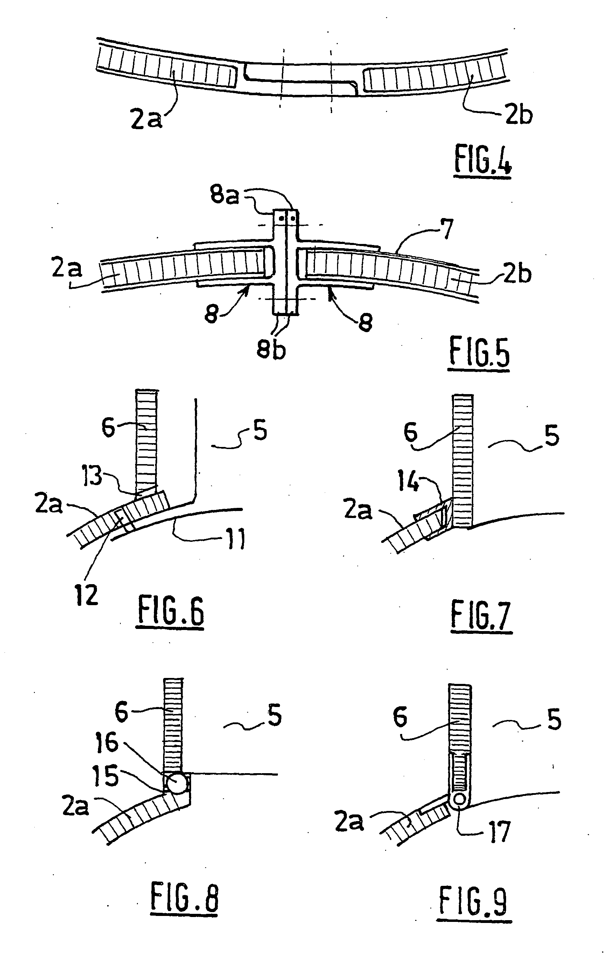

Pour une meilleure tenue structurale lors du passage du flux d'air secondaire dans la veine, la structure interne 2 doit avoir la plus grande surface de sa structure refermée. En partie supérieure, les deux demi-parties 2a, 2b peuvent présenter (comme visible sur la figure 2) une structure en peigne comprenant des bras 7 prolongeant chaque demi-partie 2a, 2b autour de la structure du mât 5. Comme représenté sur la figure 5, chaque bras 7 de chaque demi-partie 2a, 2b est terminé par une ferrure 8 présentant un épaulement supérieur 8a et un épaulement inférieur 8b qui sont boulonnés avec les épaulements supérieur 8a et inférieur 8b de la ferrure 8 équipant le bras 7 correspondant de l'autre demi-partie 2b, 2a de manière à verrouiller les deux demi-parties 2a, 2b entre elles.

L'accès aux épaulements inférieurs 8b s'effectue par des ouvertures définies par les bras 7 et nécessaires au passage du mât 5 et d'autres éléments qui transitent dans cette zone.

Les surfaces de la structure interne 2 en recouvrement avec le mât 5 peuvent le cas échéant servir de zone de liaison avec celui-ci.

Les deux demi-parties de la structure externe 3 sont indépendantes de la structure interne 2 et sont également reliées entre elles selon un axe longitudinal inférieur et un axe longitudinal supérieur.

En partie inférieure, une demi-partie 3a, 3b présente des logements 9 ménagés dans l'épaisseur de la structure externe 3 le long de l'axe longitudinal inférieur tandis que l'autre demi-partie 3b, 3a complémentaire présente un élément mâle (non visible) correspondant apte à pénétrer dans le logement 9 associé et à y être verrouillé. Le verrouillage s'effectue par brochage de chaque élément mâle avec l'autre demi-partie 3a, 3b.

En partie supérieure; chaque demi-partie 3a, 3b est liée au mât 5 au moyen de barres de liaison 10 montées flottantes à travers le mât 5 et les structures latérales 6 de carénage, chaque barre 10 présentant une première extrémité (non visible) introduite dans un logement (non visible) ménagé dans l'épaisseur d'une demi-partie 3a, 3b et une deuxième extrémité 10' introduite dans un logement (non visible) correspondant ménagé dans l'épaisseur de l'autre demi-partie 3b, 3a. Chaque extrémité des barres de liaison 10 est verrouillée avec la demi-partie 3a, 3b correspondante par brochage ou boulonnage, ce verrouillage étant conçu de manière à permettre un pivotement latéral de chaque demi-partie 3a, 3b par rapport au mât.

Dans cet exemple, la structure externe 3, bien que rattachée au mât 5, n'a pas de lien direct ni avec celui-ci ni avec le reste de la structure de la nacelle 1, et est notamment totalement indépendante de la structure interne 2.

Lors d'une opération de maintenance nécessitant l'ouverture de la nacelle 1, il suffira donc de démonter les éléments de fixation et de déposer les demi-parties 3a, 3b, 2a, 2b. Contrairement aux nacelles traditionnelles s'ouvrant latéralement, il n'est donc pas nécessaire de prévoir des vérins pour soulever radialement les demi-parties 3a, 3b, 2a, 2b, ni de solidariser les demi-parties 3a, 3b de la structure externe 3 avec les demi-parties 2a, 2b de la structure interne 2. La capacité des demi-partie 3a, 3b à légèrement pivoter autour de leurs moyens de fixation permet de faciliter cette dépose.

Pour une opération de maintenance de moindre importance on pourra prévoir des trappes dans la structure externe 3.

Il convient de noter que la nacelle 1 peut ne posséder que partiellement la structure décrite ci-dessus, par exemple la partie intermédiaire au niveau des inverseurs de poussée, la dépose de cette partie permettant d'accéder au reste de la nacelle 1.

Les figures 6 à 11 montrent, sans s'y limiter, différents modes de fixation alternatifs pour les demi-parties 2a, 2b formant la structure interne 2. Bien qu'illustré principalement à l'aide de la demi-partie 2a, ces modes de fixation s'appliquent également à la demi-partie 2b. Bien évidemment, ces modes de fixation peuvent être éventuellement combinés entre eux. Toujours selon l'invention, les divers moyens de fixation présentés sont éventuellement associés à des moyens de léger pivotement s'ils n'ont pas cette capacité propre.

La figure 6 montre le rattachement d'une demi partie 2a de la structure interne 2 directement sur un prolongement latéral 11 du mât 5 à l'aide d'un boulon 12. Un joint 13 assure l'étanchéité entre la demi-partie 2a de la structure interne 2 et la structure latérale 6 de carénage du mât 5.

La figure 7 montre le rattachement de la demi-partie 2a de la structure interne 2 sur la structure latérale 6 de carénage intégrée au mât 5 à l'aide d'une ferrure 14. Il convient de noter que la ferrure 14 peut être locale, continue sur toute la longueur de la demi-partie 2a ou encore être réalisée en plusieurs éléments. Elle peut également, selon l'invention et selon la partie interne ou externe qu'elle doit fixer, être montée sur des moyens de pivotement.

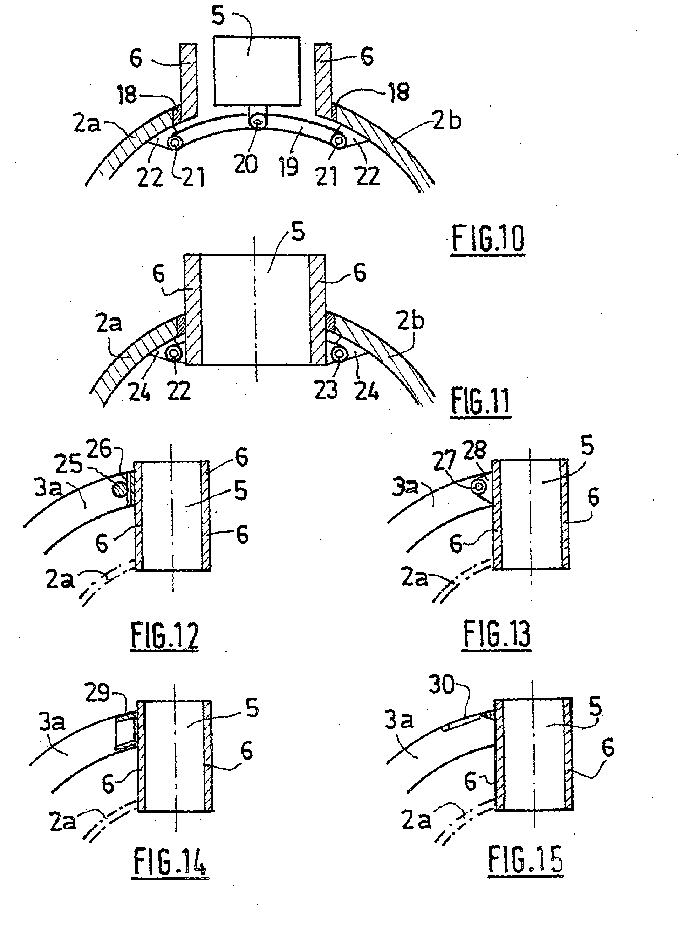

La figure 8 montre une liaison de la demi-partie 2a à l'aide d'un rail 15 longitudinal apte à coopérer avec une glissière 16 correspondante du mât 5. Bien évidemment la glissière 16 et le rail 15 peuvent être indifféremment positionnés sur le mât 5 ou sur la demi-partie 2a. Le système rail 15 / glissière 16, ici positionné sous la structure latérale 6 dans le prolongement de celle-ci peut alternativement être positionné latéralement sur le mât 5 comme montré sur la figure 12 pour une demi-partie 3a de la structure externe 3. Conformément à l'invention, le système rail 15 / glissière 16 est conformé de manière à permettre un léger pivotement du rail 15 dans la glissière 16 ou de la glissière 16 autour du rail 15.

La figure 9 montre un rattachement de la demi-partie 2a par une liaison pivot 17 permettant un débattement léger de la demi partie 2a par rapport à l'ensemble de la nacelle 1 afin d'en faciliter la dépose et d'amélirer la tolérance des demi-parties aux déformations. La rotation est limitée par un élément de butée 17a.

La figure 10 montre un rattachement par continuité structurale au voisinage du mât 5. En effet, chaque demi-partie 2a, 2b vient au contact de la structure latérale 6 correspondante par l'intermédiaire d'un joint 18 la prolongeant et assurant l'étanchéité de la structure interne 2. Le rattachement s'effectue par un bras transversal 19 s'étendant de part et d'autre du mât 5 auquel il est rattaché en un point 20, le bras transversal 19 étant terminé de part et d'autre par un oeillet 21 boulonné à un oeillet 22 correspondant solidaire de la demi partie 2a, 2b associée. La figure 11 montre également un rattachement par continuité structurale sans-recourir à un bras transversal 19. Dans ce cas, chaque demi-partie 2a, 2b est verrouillée sur les structures latérales 6 du mât 5 par l'intermédiaire d'oeillets 23, 24 et de boulonnages solidaires de la structure latérale 6 et de la demi-partie 2a, 2b respectivement.

Les figures 12 à 15 montrent sans s'y limiter différents modes de fixation alternatifs pour les demi-parties 3a, 3b de la structure externe. Bien qu'illustré principalement par la demi-partie 3a, ces modes de fixation s'appliquent également à la demi-partie 3b. Les différents moyens de fixation présentés pourront être associés à des moyens de pivotement conformément à l'invention. Bien évidemment, ces modes de fixation peuvent être éventuellement combinés entre eux et avec les modes de fixation pour la structure interne 2.

La figure 12 montre un rattachement à l'aide d'une glissière 25 ménagée dans la demi partie 3a de la structure externe 3 coopérant avec un rail 26 longitudinal solidaire de la structure latérale 6 de carénage du mât 5 fixé sur un côté de celle-ci en regard de la demi-partie 3a de la structure externe 3.

La figure 13 montre un rattachement à l'aide d'un axe horizontal 27 broché sur une ferrure 28 solidaire du mât 5. Bien évidemment, l'ensemble peut être indifféremment monté sur le mât 5 ou sur la demi-partie 3a de la structure externe 3.

La figure 14 illustre une fixation par liaison directe par boulonnage entre la demi-partie 3a de la structure externe 3 et la structure latérale 6 de carénage ou le mât 5 à l'aide de ferrures 29. Bien évidemment les ferrures 29 peuvent être solidaires du mât 5 ou de la demi partie 3a indifféremment.

La figure 15 montre la possibilité de fixer chaque demi-partie 3a, 3b de la structure externe 3 au mât 5 ou à une structure latérale 6 de carénage au moyen de verrous 30. De plus, si les deux demi-parties 3a, 3b débordent en amont ou en aval du mât 5, les deux demi-parties peuvent être directement liées entre elles par ce moyen.

Bien évidemment, tous les modes de fixation décrits pour les demi-parties 2a, 2b de la structure interne 2 et les demi-parties 3a, 3b de la structure externe 3 ne sont pas limités à ces demi-parties 2a, 2b, 3a, 3b et peuvent être aisément combinés entre eux.

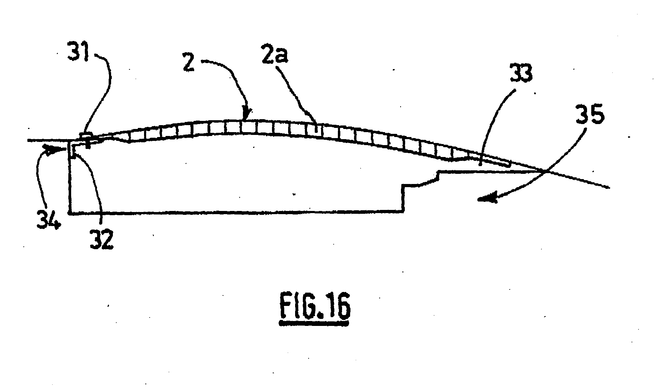

La figure 16 montre un mode particulier de fixation de la structure interne 2 sur le moteur en vue longitudinale complémentaire ou non d'un mode de fixation précédemment décrit. Dans cette configuration la structure interne 2 est fixée à l'aide d'une pluralité de boulons 31 sur une bride 32 assujettie au carter 34 de la soufflante. On pourra utiliser d'autres moyens de liaison comme un envirolage périphérique de la structure interne entre un couteau solidaire de la structure interne 2 et une bride réceptrice liée au moteur (ou inversement), ou encore une série de verrous. Afin de réduire les contraintes de déformations supportées par la structure 2, celle-ci repose en aval sur une portée 33 entourant le moteur 35 et destinée à permettre un écart de dilatation entre les deux éléments sans générer de contraintes dans ces éléments. Une telle portée permet, d'une part, de fournir au moteur 35 un complément structural, et d'autre part, d'optimiser la masse de certains éléments de structure. Cette portée 33 peut être continue ou discontinue sur la périphérie, partielle, élastique ou rigide.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention. Il convient notamment de noter que la présente invention n'est pas limitée au demi-parties intégrant les fonctions d'inversion de poussée mais peut également concerner le capot entourant le carter de la soufflant et éventuellement tout capot constituant une nacelle.

## Revendications

1. Système de fixation d'au moins un élément constitutif (2a, 2b, 3a, 3b) d'une nacelle (1) de turboréacteur sur un mât (5) de liaison auquel la nacelle est rattachée, comprenant au moins une zone de couplage présentée par l'élément constitutif apte à coopérer avec au moins une zone de couplage complémentaire présentée par le mât, et comprenant des moyens de fixation (10, 12, 14 à 16, 21 à 30) aptes à réaliser avec des moyens de fixation complémentaires, une liaison rigide et démontable entre ledit élément constitutif et le mât, **caractérisé en ce que** les moyens de fixation (10, 12, 14 à 16, 21 à 30) et les moyens de fixation complémentaires sont aptes à pivoter légèrement l'un par rapport à l'autre de manière à conférer à la liaison rigide un jeu fonctionnel de pivotement.

2. Système de fixation selon la revendication 1, **caractérisé en ce que** les moyens de fixation comprennent au moins une ferrure (14, 29).

3. Système de fixation selon la revendication 1, **caractérisé en ce que** les moyens de fixation comprennent au moins une glissière (16, 26) apte à coopérer avec un rail (15, 25) correspondant.

4. Système de fixation selon la revendication 1, **caractérisé en ce que** les moyens de fixation comprennent au moins un boulon (12) apte à coopérer avec un alésage correspondant.

5. Système de fixation selon la revendication 1, **caractérisé en ce que** les moyens de fixation sont des barres de liaison (10) rattachées à l'élément constitutif (3a, 3b) et montées flottantes à travers le mât (5) de liaison.

6. Nacelle (1) de turboréacteur destinée à abriter un moteur d'avion réalisée à partir d'une structure (2, 3) comprenant au moins deux demi-parties (2a, 2b, 3a, 3b) **caractérisée en ce que** chaque demi-partie comprend un système de fixation selon l'une quelconque des revendications 1 à 5.

7. Nacelle (1) de turboréacteur selon la revendication 6, **caractérisée en ce qu**'elle comprend une structure interne (2) destinée à entourer le moteur et une structure externe (3) délimitant une veine (4) avec la structure interne, **caractérisée en ce que** les demi-parties (2a, 2b, 3a, 3b) d'au moins l'une des structures interne et/ou externe sont équipées d'un système de fixation selon l'une quelconque des revendications 1 à 6.

8. Nacelle selon la revendication 7, **caractérisée en ce que** les demi-parties (2a, 2b, 3a, 3b) des deux structures (2, 3) sont équipées d'un système de fixation selon l'une quelconque des revendications 1 à 5.

9. Nacelle (1) selon l'une quelconque des revendications 7 ou 8, **caractérisée en ce que** les demi-parties (2a, 2b) de la structure interne (2) comprennent des moyens de verrouillage (31) aptes à coopérer avec des moyens de verrouillage complémentaires (32) assujettis au carter de la soufflante.

10. Nacelle (1) selon l'une quelconque des revendications 7 à 9, **caractérisée en ce qu'**elle comprend une portée (33) disposée en aval du moteur et apte à servir d'interface de contact entre ledit moteur et la structure interne (2).

11. Nacelle (1) selon l'une quelconque des revendications 6 à 10, **caractérisée en ce qu'**au moins une des demi-parties (3a, 3b) de la structure externe (3) comprend au moins une trappe de visite.

## Claims

1. A system for attaching at least one constitutive member (2a, 2b, 3a, 3b) of a turbine engine nacelle (1) on a connecting pylon (5) to which the nacelle is bound, comprising at least one coupling area presented by the constitutive member capable of cooperating with at least one complementary coupling area presented by the pylon, and comprising attachment means (10, 12, 14 to 16, 21 to 30) capable of achieving with complementary attachment means a rigid connection, which may be disassembled, between said constitutive member and the pylon, **characterized in that** the attachment means (10, 12, 14 to 16, 21 to 30) and the complementary attachment means are capable of slightly pivoting relatively to each other so as to give functional pivoting play to the rigid connection.

2. The attachment system according to claim 1, **characterized in that** the attachment means comprise at least one fitting (14, 29).

3. The attachment system according to claim 1, **characterized in that** the attachment means comprise at least one slide (16, 26) capable of cooperating with a corresponding rail (15, 25).

4. The attachment system according to claim 1, **characterized in that** the attachment means comprise at least one bolt (12) capable of cooperating with a corresponding bore.

5. The attachment system according to claim 1, **characterized in that** the attachment means are connecting bars (10) bound to the constitutive member (3a, 3b) and floatably mounted through the connecting pylon (5).

6. A turbine engine nacelle (1) intended to house an aircraft engine, made from a structure (2, 3) comprising at least two half-portions (2a, 2b, 3a, 3b), **characterized in that** each half-portion comprises an attachment system according to any of claims 1 to 5.

7. The turbine engine nacelle (1) according to claim 6, **characterized in that** it comprises an internal structure (2) intended to surround the engine and an external structure (3) delimiting with the internal structure a flowpath (4), **characterized in that** the half-portions (2a, 2b, 3a, 3b) of at least one of the internal and/or external structures are equipped with an attachment system according to any of claims 1 to 6.

8. The nacelle according to claim 7, **characterized in that** the half-portions (2a, 2b, 3a, 3b) of both structures (2, 3) are equipped with an attachment system according to any of claims 1 to 5.

9. The nacelle (1) according to any of claims 7 or 8, **characterized in that** the half-portions (2a, 2b) of the internal structure (2) comprise locking means (31) capable of cooperating with complementary locking means (32) secured to the fan case.

10. The nacelle (1a) according to any of claims 7 to 9, **characterized in that** it comprises a span (33) positioned downstream from the engine and capable of being used as a contact interface between said engine and the internal structure (2).

11. The nacelle (1) according to any of claims 6 to 10, **characterized in that** at least one of the half-portions (3a, 3b) of the external structure (3) comprises at least inspection hatch.

## Patentansprüche

1. System zur Befestigung mindestens eines Hauptelements (2a, 2b, 3a, 3b) einer Triebwerksgondel (1) auf einem Verbindungsmast (5), an dem die Gondel befestigt ist, das mindestens einen Kopplungsbereich umfasst, der von dem Hauptelement dargestellt wird, das imstande ist, mit mindestens einem komplementären Kopplungsbereich, der von dem Mast dargestellt wird, zusammenzuarbeiten, und das Befestigungsmittel (10, 12, 14 bis 16, 21 bis 30) umfasst, die imstande sind, mit komplementären Befestigungsmitteln eine starre und demontierbare Verbindung zwischen dem Hauptelement und dem Mast herzustellen, **dadurch gekennzeichnet, dass** die Befestigungsmittel (10, 12, 14 bis 16, 21 bis 30) und die komplementären Befestigungsmittel imstande sind, leicht, das eine im Verhältnis zum anderen, derart zu rotieren, dass der starren Verbindung ein Funktions-Rotationsspiel gegeben wird.

2. Befestigungssystem nach Anspruch 1, **dadurch gekennzeichnet, dass** die Befestigungsmittel mindestens einen Beschlag (14, 29) umfassen.

3. Befestigungssystem nach Anspruch 1, **dadurch gekennzeichnet, dass** die Befestigungsmittel mindestens eine Gleitschiene (16, 26) umfassen, die imstande ist, mit einer entsprechenden Schiene (15, 25) zusammenzuarbeiten,

4. Befestigungssystem nach Anspruch 1, **dadurch gekennzeichnet, dass** die Befestigungsmittel mindestens eine Schraube (12) umfassen, die imstande ist, mit einer entsprechenden Bohrung zusammenzuarbeiten.

5. Befestigungssystem nach Anspruch 1, **dadurch gekennzeichnet, dass** die Befestigungsmittel Verbindungsstäbe (10) sind, die an dem Hauptelement (3a, 3b) befestigt und schwebend durch den Verbindungsmast (5) montiert sind.

6. Triebwerksgondel (1), die dazu bestimmt ist, einen Flugzeugmotor aufzunehmen, die aus einer Struktur (2, 3) hergestellt ist, die mindestens zwei Halbteile (2a, 2b, 3a, 3b) umfasst, **dadurch gekennzeichnet, dass** jeder Halbteil ein Befestigungssystem nach einem der Ansprüche 1 bis 5 umfasst.

7. Triebwerksgondel (1) nach Anspruch 6, **dadurch gekennzeichnet, dass** sie eine interne Struktur (2) umfasst, die dazu bestimmt ist, den Motor zu umgeben, und eine externe Struktur (3), die mit der internen Struktur einen Gang (4) begrenzt, **dadurch gekennzeichnet, dass** die Haltteile (2a, 2b, 3a, 3b) mindestens einer der Strukturen, intern und/oder extern, mit einem Befestigungssystem nach einem der Ansprüche 1 bis 6 ausgestattet sind.

8. Gondel nach Anspruch 7, **dadurch gekennzeichnet, dass** die Halbteile (2a, 2b, 3a, 3b) der zwei Strukturen (2, 3) mit einem Befestigungssystem nach einem der Ansprüche 1 bis 5 ausgestattet sind.

9. Gondel (1) nach einem der Ansprüche 7 oder 8, **dadurch gekennzeichnet, dass** die Halbteile (2a, 2b) der internen Struktur (2) Verriegelungsmittel (31) umfassen, die imstande sind, mit komplementären Verriegelungsmitteln (32) zusammenzuarbeiten, die am Gehäuse des Gebläses befestigt sind.

10. Gondel (1) nach einem der Ansprüche 7 bis 9, **dadurch gekennzeichnet, dass** sie einen nach dem Motor angeordneten Bereich (33) umfasst, der imstande ist, als Schnittstelle zwischen dem Motor und der internen Struktur (2) zu dienen,

11. Gondel (1) nach einem der Ansprüche 6 bis 10, **dadurch gekennzeichnet, dass** mindestens eines der Halbteile (3a, 3b) der externen Struktur (3) mindestens eine lnspektionsklappe umfasst.
